# EUROPÄISCHE PATENTSCHRIFT

(11) **EP 2 840 452 B1**
(45) Veröffentlichungstag und Bekanntmachung des Hinweises auf die Patenterteilung: **12.04.2017**
(21) Anmeldenummer: 14176642.8
(22) Anmeldetag: 11.07.2014
(51) Int. Cl.: G05B 19/042, H02J 1/14

(54) **Steuerungsstruktur für eine mobile Arbeitsmaschine, mobile Arbeitsmaschine und Verfahren mit einer Steuerungsstruktur**
Control structure for a mobile working machine, mobile working machine and method with a control structure
Structure de commande pour une machine de travail mobile, machine de travail mobile et procédé présentant une structure de commande

(30) Priorität: 29.07.2013 DE 102013214732
(43) Veröffentlichungstag der Anmeldung: 25.02.2015
(73) Patentinhaber: Robert Bosch GmbH, 70442 Stuttgart (DE)
(72) Erfinder: Schleyer, Markus, 71640 Ludwigsburg (DE); Fassnacht, Jochen, 75365 Calw (DE); López Pamplona, Alejandro, 72160 Horb (DE)
(74) Vertreter: Maiß, Harald

(56) Entgegenhaltungen:
- DE-A1- 19 857 916
- US-A1- 2009 140 574
- US-A1- 2013 006 457

## Beschreibung

Die Erfindung geht aus von einer Steuerungsstruktur für eine mobile Arbeitsmaschine. Des Weiteren geht die Erfindung von einer mobilen Arbeitsmaschine mit einer derartigen Steuerungsstruktur und einem Verfahren mit einer derartigen Steuerungsstruktur aus.

Aus dem Stand der Technik sind Steuerungsstrukturen beziehungsweise Engergiemanagementstrategien für Personenkraftwagen (PKW) und Lastkraftwagen (LKW) bekannt. Diese basieren darauf, dass ein Fahrantrieb des Pkws oder des Lkws einen hauptsächlichen Leistungsverbraucher darstellt. Derartige Energiemanagementstrategien weisen daher einen sogenannten Powertrain-Koordinator auf, welcher einen Triebstrang des Fahrantriebs mit oder ohne zusätzlicher Hybridisierung koordiniert. Nebenverbraucher außerhalb des Triebstrangs sind üblicherweise eine Lichtmaschine und ein Kompressor für eine Klimaanlage. Diese weisen in der Regel eine Maximalleistung unter 5 KW auf und benötigen somit weniger als 5 % einer Verbrennungsmotorleistung, wenn davon ausgegangen wird, dass diese 100 KW beträgt. Daher sind derartige Energiemanagementstrategien auf die Optimierung des Triebstangs inklusive seiner Hydridkomponenten fokussiert.

Bei mobilen Arbeitsmaschinen hingegen kann je nach Arbeitssituation beispielsweise der Fahrantrieb, eine Zapfwelle beziehungsweise ein Nebenabtrieb oder eine Arbeitshydraulik für einen Arbeitsarm beziehungsweise für eine Arbeitsfunktion, wie beispielsweise Dreschen oder Häckseln, den größten Anteil der Verbrennungsmotorleistung verbrauchen. Beispielsweise werden bei einem Traktor mit einer Ballenhochdruckpresse beim Pressen bis zu 90 % der Verbrennungsmotorleistung über die Zapfwelle an die Ballenhochdruckpresse abgegeben. Die restliche Verbrennungsmotorleistung wird für den Fahrantrieb und für Nebenaggregate genutzt. In einer derartigen Arbeitssituation wird bei einer Leistungsknappheit die Presse bevorzugt, da eine "stehende" Presse zu verstopfen neigt. Des Weiteren ist es beispielsweise wichtig, bei einem zum Pflügen eingesetzten Traktor, eine Arbeitshydraulik für das Pflügen ausreichend mit Verbrennungsmotorleistung zu versorgen, da hierüber eine Pflugtiefe und somit eine Abtriebsleistung geregelt ist. Daneben sind bei mobilen Arbeitsmaschinen auch Arbeitssituationen möglich, bei denen der Fahrantrieb zu bevorzugen ist. Des Weiteren wird beispielsweise bei einer mobilen Arbeitsmaschine in Form eines Baggers beim Baggern der größte Anteil der Verbrennungsmotorleistung von der Arbeitshydraulik des Arbeitsarms umgesetzt, wobei der Bagger dann zusätzlich über seinen Fahrantrieb fahrbar ist, allerdings mit einer geringen Geschwindigkeit. Für höhere Geschwindigkeiten des Baggers, insbesondere eines Mobilbaggers, sind spezielle Fahrmodi vorgesehen, in denen eine Funktion des Arbeitsarms eingeschränkt ist.

Für die mobilen Arbeitsmaschinen ist somit die Energiemanagementstrategie für Pkws und Lkws, die für den Fahrantrieb ausgelegt ist, nur bedingt geeignet. Werden als Nebenverbraucher beispielsweise die Arbeitshydraulik und/oder die Zapfwelle eingesetzt, so führt dies bei dieser Energiemanagementstrategie zu komplizierten Sonderkonstruktionen oder die Nebenverbraucher können nicht bedarfsgerecht eingesetzt werden.

Des Weiteren ist beispielsweise aus der DE 197 09 317 B4 eine Steuerungsstruktur für ein Fahrzeug bekannt, die Koordinatoren aufweist, die eine Leistung zwischen Energiequellen und Verbraucher verwalten und verteilen.

Die Druckschrift DE 198 57 916 A1 offenbart eine weitere Steuerungsstruktur für Verbraucher. Diese hat ein übergeordnetes Verbrauchermanagement, das von den Verbrauchern den Leistungsbedarf ermittelt. Über einen Koordinator wird der ermittelte Leistungsbedarf erfasst und entsprechend von Energiequellen bereitgestellt. Über das Verbrauchermanagement werden dann die Verbraucher mit ihrer benötigten Leistung angesteuert.

Auch die Druckschriften US 2013/006457 A1, US 2009/1401574 A1 und DE 198 57 916 A1 offenbaren jeweils eine derartige gattungsgemäße Steuerungsstruktur.

Dem gegenüber liegt der Erfindung die Aufgabe zugrunde, eine flexible und einfach ausgestaltete Steuerungsstruktur für eine mobile Arbeitsmaschine zu schaffen. Eine weitere Aufgabe der Erfindung ist es, eine mobile Arbeitsmaschine mit einer derartigen Steuerungsstruktur und ein Verfahren mit einer derartigen Steuerungsstruktur zu schaffen.

Die Aufgabe hinsichtlich der Steuerungsstruktur wird gelöst gemäß den Merkmalen des Anspruchs 1, hinsichtlich der mobilen Arbeitsmaschine gemäß den Merkmalen des Anspruchs 14 und hinsichtlich des Verfahrens gemäß den Merkmalen des Anspruchs 15.

Sonstige vorteilhafte Weiterbildungen der Erfindung sind Gegenstand weiterer Unteransprüche.

Erfindungsgemäß ist eine Steuerungsstruktur für eine mobile Arbeitsmaschine vorgesehen. Diese hat Verbraucherenergiekoordinatoren, denen jeweils eine Steuerung beziehungsweise ein Management beziehungsweise ein Managementbaustein für zumindest einen Verbraucher zugeordnet ist. Ein jeweiliger Verbraucherenergiekoordinator ermittelt anhand von Soll-Werten der ihm zugeordneten Steuerung einen Leistungsbedarf für den oder die von der Steuerung gesteuerten Verbraucher. Des Weiteren ist ein Gesamtenergiekoordinator vorgesehen, der mit den Verbraucherenergiekoordinatoren kommuniziert und aus den ermittelten Leistungsbedarfen von den Verbraucherenergiekoordinatoren einen Gesamtleistungsbedarf bestimmt. Mit dem Gesamtenergiekoordinator ist dann die zur Verfügung stehende Leistung auf die Verbraucherenergiekoordinatoren verteilt.

Diese Lösung hat den Vorteil, dass eine universelle Steuerungsstruktur für ein Energiemanagement beziehungsweise eine Energiekoordination geschaffen wird. Die Verbraucherenergiekoordinatoren bilden hierbei eine Energiekoordinationsebene und der Gesamtenergiekoordinator eine weitere übergeordnete Energiekoordinationsebene. Mit der erfindungsgemäßen Steuerungsstruktur ist somit eine funktionale Steuerung der Verbraucher von dem Energiemanagement getrennt. Jeder Verbraucher, der von einem Bediener beziehungsweise von einer Steuerung Soll-Werte für seine Funktion erhält, hat somit einen Verbraucherenergiekoordinator und davon gesondert die Steuerung, die auf Basis des Soll-Werts oder der Soll-Werte die Funktion des Verbrauches steuert beziehungsweise regelt.

Vorteilhaft ist außerdem, dass die Verbraucherenergiekoordinatoren an die ihnen zugeordnete Steuerung beziehungsweise an die ihnen zugeordneten Verbraucher angepasst werden können und für den Gesamtenergiekoordinator keine Anpassung notwendig ist. Somit kann ein jeweiliger Verbraucherenergiekoordinator mit den physikalischen Größen der ihm zugeordneten Steuerung beziehungsweise der ihm zugeordneten Verbraucher arbeiten. Die Verbraucherenergiekoordinatoren sind somit als Art Module oder Blöcke zu verstehen, die an ihre Steuerung beziehungsweise an ihre Verbraucher angepasst sind, ohne dass eine Anpassung des Gesamtenergiekoordinators an die unterschiedlichen Steuerungen beziehungsweise unterschiedlichen Verbraucher erfolgen muss. Es wird somit eine einheitliche Systemstruktur für mobile Arbeitsmaschinen geschaffen.

Bei der mobilen Arbeitsmaschine handelt es sich beispielsweise um einen Traktor, einen Mähdrescher, einen Hydraulikbagger, einen Radlader, einen Muldenkipper, einen Lastkraftwagen mit hydraulischem Ladekran oder um ein Kommunalfahrzeug.

Mit Vorteil ist ein Verbraucherenergiekoordinator für eine Arbeitshydraulik, die in der Regel zumindest 40 % (oft mehr als 90 %) einer Leistung eines Verbrennungsmotors der mobilen Arbeitsmaschine benötigt, vorgesehen. Dieser ermittelt den Leistungsbedarf der Arbeitshydraulik anhand eines Bedarfs eines Drucks und eines Volumenstroms der Arbeitshydraulik. Den Bedarf des Drucks und des Volumenstroms kann er hierbei von der Arbeitshydraulik erhalten. Somit können mobile Arbeitsmaschinen mit den unterschiedlichsten Arbeitshydrauliken einfach über den Verbraucherenergiekoordinator mit dem Gesamtenergiekoordinator der mobilen Arbeitsmaschine kommunizieren, indem dem Verbraucherenergiekoordinator einfach der Bedarf des Drucks und des Volumenstroms übermittelt wird. Die übrigen Verbraucherenergiekoordinatoren beziehungsweise der Gesamtenergiekoordinator sind somit völlig unabhängig von der jeweiligen Ausgestaltung der Arbeitshydraulik.

Vorzugsweise wird der Leistungsbedarf der Arbeitshydraulik von dem Verbraucherenergiekoordinator als Drehmoment und/oder als Drehzahl zumindest einer Hydraulikpumpe (Leistung an der Pumpenwelle) an den Gesamtenergiekoordinator übermittelt.

Des Weiteren kann die mobile Arbeitsmaschine einen Verbraucherenergiekoordinator für eine Zapfwelle beziehungsweise einen Nebenabtrieb aufweisen. Bei landwirtschaftlichen Traktoren dient eine Zapfwelle beispielsweise zum Antrieb unterschiedlichster Anbaugeräte. Zusätzlich oder alternativ kann ein Verbraucherenergiekoordinator für ein Hochvolt- und/oder Niedervolt-Bordnetz vorgesehen sein. An ein Bordnetz können verschiedenste elektrische Verbraucher, wie beispielsweise Startermotor, Scheibenwischer, Motorsteuerung oder Fahrzeugbeleuchtung, angeschlossen sein. Zusätzlich oder alternativ kann ein Verbraucherenergiekoordinator für einen Triebstrang vorgesehen sein.

Von dem Verbraucherenergiekoordinator kann für den Triebstrang der Leistungsbedarf in Form eines Drehmoments und/oder einer Drehzahl an den Gesamtenergiekoordinator übermittelt sein. Dieser wiederum kann eine Übersetzungsvorgabe an den Verbraucherenergiekoordinator übermitteln.

Der Verbraucherenergiekoordinator für die Zapfwelle kann an den Gesamtenergiekoordinator den Leistungsbedarf in Form eines Drehmoments und/oder einer Drehzahl übermitteln. Der Gesamtenergiekoordinator wiederum kann dem Verbraucherenergiekoordinator ein Übersetzungsverhältnis für ein Getriebe der Zapfwelle übermitteln.

Mit Vorteil wird zumindest eine Energiequelle für die Verbraucher in Abhängigkeit von dem Gesamtleistungsbedarf gesteuert. Als Energiequelle sind beispielsweise ein Verbrennungsmotor und/oder ein Elektromotor vorgesehen. Eine jeweilige Energiequelle kann hierbei eine Steuerung beziehungsweise ein Management aufweisen, über das sie mit dem Gesamtenergiekoordinator kommuniziert. Bei dem Verbrennungsmotor handelt es sich vorzugsweise um einen Dieselmotor.

Des Weiteren kann ein Generator vorgesehen sein, der vom Verbrennungsmotor angetrieben wird, um beispielsweise einen elektrischen Speicher zu laden und/oder um elektrische Energie in das Bordnetz einzuspeisen.

Für die Arbeitshydraulik kann zumindest eine Hydraulikpumpe vorgesehen sein, die von der Energiequelle, insbesondere von dem Verbrennungsmotor angetrieben wird.

Ein Fahrantrieb der mobilen Arbeitsmaschine hat vorzugsweise Räder oder Ketten. Diese sind wahlweise über ein Getriebe vom Verbrennungsmotor oder über von der Hydropumpe angetriebene Hydromotoren antreibbar. Gegebenenfalls können sie von einem Elektromotor als Parallel- oder Serienhybridantrieb betrieben werden.

Die Arbeitshydraulik hat zumindest einen hydraulischen Aktuator, bei dem es sich beispielsweise um einen Hydrozylinder oder um einen Hydromotor handelt. Der hydraulische Aktuator kann von der Hydraulikpumpe angetrieben werden. Die hydraulischen Aktuatoren können dann beispielsweise als Baggerarm, als Mulde bei einem Muldenkipper, als Schaufel bei einem Radlader, als Ladekran, als Hubwerk bei einem Traktor oder zum Anheben von Arbeitsgeräten, wie Pflug oder Mähwerk eingesetzt werden.

Des Weiteren kann ein Hydrospeicher vorgesehen sein, mit dem Druckmittel zum Antreiben des hydraulischen Fahrantriebs oder zum Antreiben der Arbeitshydraulik entlassbar ist.

In weiterer Ausgestaltung der Erfindung wird die Energiequelle oder werden die Energiequellen hinsichtlich ihres verbrauchsoptimalen Betriebspunktes gesteuert, insbesondere wenn der Gesamtleistungsbedarf kleiner als die zur Verfügung stehende Gesamtleistung ist. Der Gesamtenergiekoordinator kann hierbei eine verbrauchsoptimale Drehzahl und/oder andere wählbare Parameter der Energiequellen ermitteln. Es kann somit eine Leistung aus den unterschiedlichsten Energiequellen derart herangezogen werden, dass die mobile Arbeitsmaschine in ihrem optimalen, insbesondere verbrauchsoptimalen Betriebspunkt eingesetzt wird. Des Weiteren kann ein jeweiliger Verbraucherenergiekoordinator die ihm zur Verfügung stehende Leistung derart verteilen, dass die ihm zugeordneten Verbraucher in ihrem optimalen Betriebspunkt eingesetzt werden. Die Arbeitsmaschine und/oder die Verbraucher werden somit verbrauchs- und/oder wirkungsgradoptimal betrieben. Somit liegt eine Zuständigkeit für den Einsatz der Verbraucher in ihrem optimalen Betriebspunkt bei dem jeweiligen Verbraucherenergiekoordinator. Es kann somit ein insbesondere verbrauchsoptimaler Betrieb der mobilen Arbeitsmaschine auf Gesamtfahrzeugebene und auf Subsystemebene einfach erreicht werden.

Vorzugsweise ist es des Weiteren möglich, dass der Gesamtenergiekoordinator die für die Verbraucherenergiekoordinatoren zur Verfügung stehende Leistung priorisiert, insbesondere falls der Gesamtleistungsbedarf größer als die zur Verfügung stehende Gesamtleistung ist. Die Priorisierung erfolgt dabei vorzugsweise derart, dass die Verbraucherenergiekoordinatoren für sicherheitsrelevante Verbraucher, beispielsweise für Bremsen und Lenkung, ausreichend Leistung erhalten. Vorteilhaft ist, wenn ein jeweiliger Verbraucherenergiekoordinator die ihm zur Verfügung stehende Leistung für die ihm zugeordneten Verbraucher priorisiert. Die Priorisierung der Verbraucher erfolgt somit einfach durch den jeweiligen Verbraucherenergiekoordinator. Ist der Gesamtleistungsbedarf größer als die zur Verfügung stehende Gesamtleistung, so wird beispielsweise bei einem Traktor, der eine Hochdruckballenpresse antreibt, die Zapfwelle gegenüber dem Fahrantrieb priorisiert, womit der Traktor eher stehen bleibt, als dass die Zapfwelle gedrosselt wird.

Die Steuerung der Verbraucher in ihren optimalen Betriebspunkten und die Priorisierung der Verbraucher über die Verbraucherenergiekoordinatoren sind besonders bei der Arbeitshydraulik äußerst vorteilhaft. Es ist somit durch die Erfindung nicht mehr notwendig, den Gesamtenergiekoordinator an den komplexen Aufbau der Arbeitshydraulik anzupassen, um eben die genannten Steuerung und Priorisierung vorzunehmen, sondern es muss lediglich der Verbraucherenergiekoordinator angepasst sein.

In weiterer Ausgestaltung der Erfindung ist ein jeweiliger Verbraucherenergiekoordinator mit dem Gesamtenergiekoordinator über eine einheitliche Schnittstelle verbunden. Hierdurch kann auf einfache Weise die Steuerungsstruktur für unterschiedlichste mobile Arbeitsmaschinen eingesetzt werden.

Wie vorstehend bereits erläutert, steuert eine jeweilige Steuerung auf Basis des oder der von ihr erfassten Soll-Werts beziehungsweise Soll-Werte den oder die ihr zugeordneten Verbraucher.

Der Gesamtenergiekoordinator kann beispielsweise die gesamte benötigte Leistung bezogen auf die Kurbelwelle des Verbrennungsmotors ermitteln. Des Weiteren ermittelt der Gesamtenergiekoordinator vorzugsweise nicht nur den Gesamtleistungsbedarf, sondern auch die verfügbare Gesamtleistung.

In weiterer Ausgestaltung der Erfindung wird vom Gesamtenergiekoordinator und/oder von zumindest einem Verbraucherenergiekoordinator eine Leistungsreserve ermittelt. Diese kann für die Betätigung einer hydraulischen Bremse oder einer hydraulischen Lenkung, für das Bordnetz, für ein Getriebe oder eine Druckluftbremse dienen.

Des Weiteren ist denkbar, dass der Gesamtenergiekoordinator mit einem Laderegler eines Hydrospeichers und/oder einem Laderegler einer Niedervolt-Batterie und/oder einem Laderegler einer Hochvolt-Batterie kommuniziert, um diese bei der Leistungsverteilung zu berücksichtigen.

Die Soll-Werte für die Arbeitshydraulik können beispielsweise von einem Human Interface und/oder von einer überlagerten Steuerung (beispielsweise Precision Farming) vorgegeben werden.

Erfindungsgemäß ist eine mobile Arbeitsmaschine mit einer erfindungsgemäßen Steuerungsstruktur vorgesehen, umfassend:
- einen Verbrennungsmotor, dessen Leistung von dem Gesamtenergiekoordinator bestimmbar ist,
- wenigstens eine vom Verbrennungsmotor angetriebenen Hydraulikpumpe der Arbeitshydraulik,
- einen Fahrantrieb,
- wenigstens ein elektrisches Bordnetz,
- einen vom Verbrennungsmotor angetriebenen Generator zum Laden eines Energiespeichers und zur Einspeisung von Energie in das elektrische Bordnetz, und
- wenigstens einen von der Hydraulikpumpe antreibbaren hydraulischen Aktuator.

Des Weiteren kann die mobile Arbeitsmaschine die Zapfwelle aufweisen. Der Fahrantrieb ist beispielsweise über ein Getriebe von einem Verbrennungsmotor und/oder von zumindest einem Hydromotor und/oder von einem Elektromotor antreibbar. Der Hydromotor kann zumindest über eine Hydropumpe versorgt sein.

Die Arbeitsmaschine kann des Weiteren einen, insbesondere von der Hydraulikpumpe aufladbaren Hydrospeicher haben. Von diesem kann Druckmittel zum Antreiben des hydraulischen Fahrantriebs oder zum Antreiben der Arbeitshydraulik entlassbar sein.

Für den Fahrantrieb kann ebenfalls ein Verbraucherenergiekoordinator vorgesehen sein.

Erfindungsgemäß ist ein Verfahren mit einer erfindungsgemäßen Steuerungsstruktur vorgesehen.

Im Folgenden wird eine bevorzugte Ausführungsform der Erfindung anhand von Zeichnungen näher erläutert. Es zeigen:
Figur 1 in einem Blockschaltbild eine erfindungsgemäße Steuerungsstruktur,
Figur 2 in einem Blockschaltbild einen Gesamtenergiekoordinator der Steuerungsstruktur,
Figur 3 in einem Blockschaltbild einen Verbraucherenergiekoordinator für eine Arbeitshydraulik,
Figur 4 in einem Blockschaltbild einen Verbraucherenergiekoordinator für ein Bordnetz,
Figur 5 in einem Blockschaltbild einen Verbraucherenergiekoordinator für ein weiteres Bordnetzes, beispielsweise für ein HV-Bordnetz,
Figur 6 in einem Blockschaltbild einen Verbraucherenergiekoordinator einer Zapfwelle,
Figur 7 in einem Blockschaltbild einen Verbraucherenergiekoordinator für einen Triebstrang.

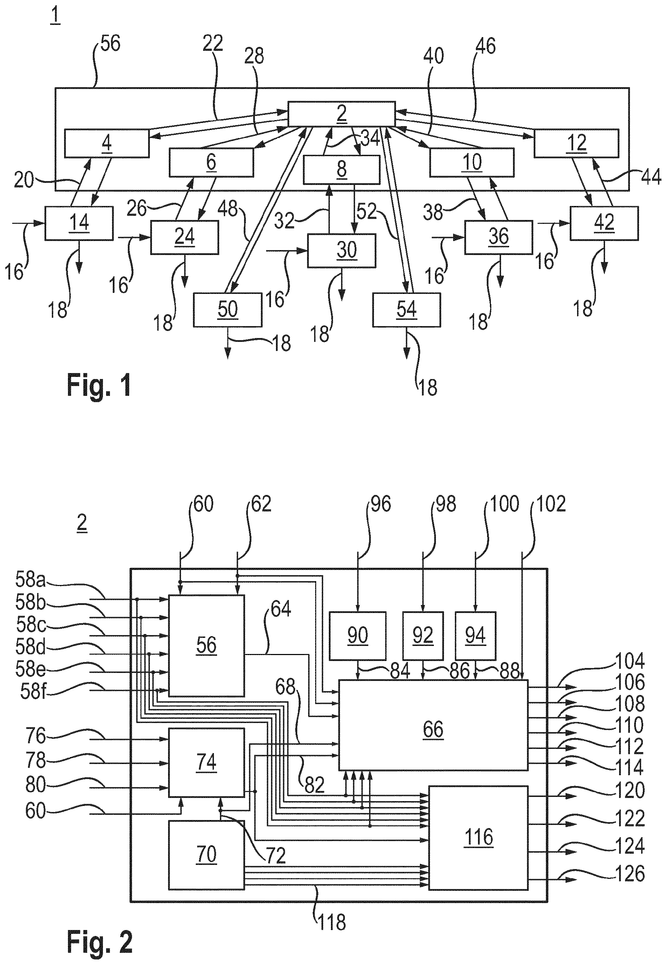

Gemäß Figur 1 ist eine erfindungsgemäße Steuerungsstruktur 1 für eine mobile Arbeitsmaschine dargestellt. Diese hat einen Gesamtenergiekoordinator 2, dem mehrere Verbraucherkoordinatoren 4 bis 12 untergeordnet sind. Bei den Verbraucherkoordinatoren 4 bis 12 handelt es sich um Energiekoordinatoren.

Der Verbraucherkoordinator 4 ist für eine Arbeitshydraulik vorgesehen. Er kommuniziert hierbei mit dem Management beziehungsweise der Steuerung 14 der Arbeitshydraulik. Diese weist als Eingangsgrößen Sollwerte 16 auf, bei denen es sich um Volumenströme und/oder Drücke handelt. Ausgangsseitig weist die Steuerung 14 eine Ansteuerung 18 für Verbraucher beziehungsweise Komponenten auf. Aus den Sollwerten 16 werden von der Steuerung 14 die benötigten Volumenströme und Drücke ermittelt, die über eine Schnittstelle 20 dem Verbraucherenergiekoordinator 4 für die Arbeitshydraulik gemeldet werden. Dieser wiederum ermittelt daraus einen Leistungsbedarf und übermittelt diesen über eine Schnittstelle 22 dem Gesamtenergiekoordinator 2.

Der Verbraucherenergiekoordinator 6 ist für eine Zapfwelle vorgesehen. Dem Verbraucherenergiekoordinator 6 ist hierbei ein Management beziehungsweise eine Steuerung 24 für die Zapfwelle zugeordnet. Diese hat als Eingang ebenfalls Sollwerte 16, beispielsweise eine Drehzahl, und weist ausgangsseitig die Ansteuerung 18 für die Zapfwelle auf, beispielsweise eine Übersetzung. Über eine Schnittstelle 26 ist die Steuerung 24 der Zapfwelle mit dem Verbraucherenergiekoordinator 6 verbunden, der wiederum über eine Schnittstelle 28 mit dem Gesamtenergiekoordinator 2 verbunden ist.

Der Verbraucherenergiekoordinator 8 ist für einen Triebstrang vorgesehen. Diesem ist hierbei ein Management beziehungsweise eine Steuerung 30 des Triebstrangs zugeordnet. Diese hat als Eingangsgröße Sollwerte 16 und hat als Ausgang die Ansteuerung 18 für den Triebstrang. Die Steuerung 30 ist dabei über eine Schnittstelle 32 mit dem Verbraucherenergiekoordinator 8 verbunden. Dieser wiederum ist über eine Schnittstelle 34 mit dem Gesamtenergiekoordinator 2 verbunden.

Für ein Niedervolt-Bordnetz (NV-Bordnetz) ist der Verbraucherenergiekoordinator 10 vorgesehen. Diesem ist hierbei ein Management beziehungsweise eine Steuerung 36 für Niedervolt-Verbraucher zugeordnet, die Sollwerte 16, beispielsweise eine Leistung, als Eingangsgröße und die Ansteuerung 18 als Ausgang aufweist. Die Steuerung 36 ist über eine Schnittstelle 38 mit dem Verbraucherenergiekoordinator 10 und dieser wiederum über eine Schnittstelle 40 mit dem Gesamtenergiekoordinator 2 verbunden.

Des Weiteren ist der Verbraucherenergiekoordinator 12 einem Hochvolt-Bordnetz (HV-Bordnetz) zugeordnet. Der Verbraucherenergiekoordinator 12 wirkt hierbei mit einem Management beziehungsweise einer Steuerung 42 für Hochvolt-Verbraucher zusammen. Die Steuerung 42 hat eingangsseitig Sollwerte 16, beispielsweise eine Leistung, und ausgangsseitig die Ansteuerung 18, mit der Verbraucher gesteuert sind. Über eine Schnittstelle 44 ist die Steuerung 42 mit dem Verbraucherenergiekoordinator 12 verbunden. Dieser wiederum ist über eine Schnittstelle 46 mit dem Gesamtenergiekoordinator 2 verbunden.

Der Gesamtenergiekoordinator 2 ist des Weiteren direkt über eine Schnittstelle 48 mit einem Management beziehungsweise einer Steuerung für einen Verbrennungsmotor verbunden. Diese hat ausgangsseitig eine Ansteuerung 18, über die die an die Steuerung 50 angeschlossene Verbraucher, also insbesondere der Verbrennungsmotor, angesteuert werden.

Des Weiteren ist der Gesamtenergiekoordinator 2 direkt über eine Schnittstelle 52 mit einem Management beziehungsweise einer Steuerung 54 für einen Elektromotor verbunden. Die Steuerung 54 hat ausgangsseitig eine Ansteuerung 18 für die an die Steuerung 54 angeschlossenen Verbraucher, also für zumindest einen Elektromotor.

Der Rahmen 56 in Figur 1 verdeutlicht, dass außerhalb des Energiemanagement eine funktionale Steuerung für Verbraucher vorgesehen ist, die im Prinzip für die Umsetzung eines Fahrerwunsches zuständig ist. Beispielsweise erhält die Steuerung 14 für die Arbeitshydraulik Sollwerte von einem Human-Interface oder einer überlagerten Steuerung und berechnet hieraus die notwendigen Volumenströme und Drücke, die dann an den übergeordneten Verbraucherenergiekoordinator 4 gemeldet werden. Dieser ermittelt hieraus die nötige Leistung an einer Pumpenwelle beziehungsweise an Pumpenwellen und meldet diese dem Gesamtenergiekoordinator 2. Die anderen Verbraucherkoordinatoren 6 bis 12 melden ebenfalls den zur Umsetzung der Sollwerte nötigen Leistungsbedarf. Der Gesamtenergiekoordinator 2 errechnet dann aus den Leistungsbedarfen einen Gesamtleistungsbedarf, insbesondere bezogen auf eine Kurbelwelle des Verbrennungsmotors.

Falls eine zur Verfügung stehende Leistung den Gesamtleistungsbedarf überschreitet, so ermittelt die Betriebsstrategie des Gesamtkoordinators 2 eine verbrauchsoptimale Drehzahl beziehungsweise andere wählbare Parameter des Systems zur Bereitstellung des nötigen Leistungsbedarfs. Des Weiteren wird durch die Betriebsstrategie des Gesamtenergiekoordinators 2 ein verbrauchsoptimaler Bezug des nötigen Gesamtleitungsbedarfs aus verschiedenen Quellen, wie beispielsweise Verbrennungsmotor und/oder elektrischer Antrieb mit Speicher, ermöglicht. Diese gibt hierfür Sollvorgaben an die Steuerung 50 des Verbrennungsmotors und für die Steuerung 54 des Elektromotors vor. Die anderen Verbraucherenergiekoordinatoren 4 bis 12 wiederum können ihrerseits optimale Betriebspunkte der ihnen zugeordneten Verbraucher vorgeben. Ein verbrauchsoptimaler Betrieb der mobilen Arbeitsmaschine erfolgt somit auf Gesamtfahrzeugebene und auch auf Subsystemebene.

Ist der Gesamtleistungsbedarf größer als die zur Verfügung stehende Leistung, so führt der Gesamtenergiekoordinator 2 eine entsprechende Priorisierung der untergeordneten Verbraucherenergiekoordinatoren 4 bis 12 durch.

Gemäß Figur 2 ist eine beispielhafte Ausführungsform des Gesamtenergiekoordinators 2 dargestellt. Über einen Block 56 erfolgt hierbei eine Ermittlung des Gesamtleistungsbedarfs bezogen auf die Kurbelwelle des Verbrennungsmotors. Als Eingangsgrößen weist dieser Block 56 beispielsweise einen Leistungsbedarf 58a einer Klimaanlage und/oder einen Leistungsbedarf 58b in Form eines Abtriebsmoments eines Rades der Arbeitsmaschine und/oder einen Leistungsbedarf 58c in Form eines Drehmoments der Zapfwelle und/oder einen Leistungsbedarf 58d in Form einer elektrischen Leistung und/oder einen Leistungsbedarf 58e in Form einer Leistung für eine Steckdose eines Anbaugeräts und/oder einen Leistungsbedarf 58f in Form einer Leistung für die Arbeitshydraulik auf. Als weitere Eingangsgröße hat der Block 56 einen Geschwindigkeitsistwert 60 der Arbeitsmaschine und eine Drehzahl 62 des Verbrennungsmotors und/oder des Elektromotors und/oder der Zapfwelle. Die Leistungsbedarfe 58a bis 58f werden dem Gesamtenergiekoordinator 2 unter anderem von dem Verbraucherenergiekoordinatoren 4 bis 12 übermittelt. Über eine Verbindung 64 übermittelt der Block 56 den Gesamtleistungsbedarf an einen Block 66, der eine Betriebsstrategie (Hybridstrategie / Schaltstrategie) darstellt. Dieser hat als Eingangsgrößen ebenfalls die Drehzahl 62 und den Geschwindigkeitsistwert 60. Außerdem erhält er über die Verbindung 68 eine reservierte Leistung von dem Block 70. Der Block 70 dient dabei zur Ermittlung einer Leistungsreserve für die Arbeitshydraulik (Bremse / Lenkung) und/oder für ein Bordnetz (12-Volt-Bordnetz) und/oder für ein Getriebe und/oder für eine Druckluftbremse. Die Leistungsreserve wird des Weiteren über eine Verbindung 72 einem Block 74 übermittelt, der zur Ermittlung der verfügbaren Leistung dient. Dieser erhält eingangsseitig eine Leistungsgrenze 76 eines Druckspeichers und/oder eine Leistungsgrenze 78 einer Batterie und/oder ein mögliches Drehmoments des Verbrennungs-, Elektro- und/oder - Hydromotors 80. Außerdem hat er als Eingangsgröße den Geschwindigkeitsistwert 60. Die vom Block 74 ermittelte verfügbare Leistung wird über eine Verbindung 82 dem Block 66 mit der Betriebsstrategie übermittelt. Der Block 66 hat als weitere Eingangsgrößen einen Ladebedarf eines Druckspeichers (Hydrospeichers) über die Verbindung 84 und/oder einen Ladebedarf einer Niedervolt-Batterie über die Verbindung 86 und/oder einen Ladebedarf einer Hochvolt-Batterie über die Verbindung 88. Die Verbindung 84 verbindet dabei den Block 66 mit einem Block 90, der einen Laderegler für den Hydrospeicher vorsieht. Über die Verbindung 86 ist der Block 66 mit einem Block 92 verbunden, der einen Laderegler für die Niedervolt-Batterie aufweist. Ein Laderegler für die Hochvolt-Batterie ist durch den Bock 94 dargestellt, der über die Verbindung 88 mit dem Block 66 verbunden ist. Der Block 90, also der Laderegler des Hydrospeichers, hat als Eingangsgröße den Ladezustand 96. Der Block 92, also der Laderegler der Niedervolt-Batterie, weist als Eingang den Ladezustand 98 der Niedervolt-Batterie auf und der Laderegler für die Hochvolt-Batterie, beziehungsweise der Block 94, hat als Eingang einen Ladezustand 100 der Hochvolt-Batterie. Eine weitere Eingangsgröße für die Betriebsstrategie des Blocks 66 kann eine Fahr-Modus-Vorgabe 102 sein. Die Leistungsbedarfe 58a bis 58f werden neben dem Block 58 auch dem Block 66 und somit der Betriebsstrategie übermittelt.

Ausgangsseitig sind bei der Betriebsstrategie mit dem Block 66 Sollgrößen vorgesehen. Als Sollgrößen ist eine Solldrehzahl 104 beziehungsweise Solldrehmoment für den Verbrennungsmotor und/oder ein Solldrehmoment 106 für den Elektromotor und/oder ein Solldrehmoment 108 für den Hydromotor und/oder eine Sollübersetzung für ein Getriebe 110 und/oder eine Sollübersetzung 112 für die Zapfwelle und/oder eine Sollleistung für einen DC/DC-Wandler und/oder Generator 114 vorgesehen. Mit diesen Sollgrößen werden somit insbesondere die Energiequellen gesteuert.

Ein weiterer Block 116 des Gesamtenergiekoordinators 2 dient zur Ermittlung der zulässigen Maximalleistung eines jeweiligen Verbrauchers beziehungsweise der Priorisierung der Verbraucher bei nicht ausreichender Leistung. Als Eingangsgröße für den Block 116 sind die Leistungsbedarfe 58a bis 58f vorgesehen. Eine weitere Eingangsgröße stellt die verfügbare Leistung mit der Verbindung 82 dar. Des Weiteren wird dem Block 116 mit den Verbindungen 118 eine reservierte Leistung einzelner Subsysteme übermittelt. Ausgangsseitig des Blocks 116 sind dann die den Verbrauchern zugeteilten Leistungen vorgesehen, die den Verbraucherenergiekoordinatoren 4 bis 12 übermittelt werden. Es ist beispielsweise eine maximale Leistung 120 für eine Klimaanlage, eine maximale Leistung 122 für die Arbeitshydraulik, eine maximale Leistung 124 für die Hochvolt-Verbraucher und eine maximale Leistung 126 für die Niedervolt-Verbraucher vorgesehen.

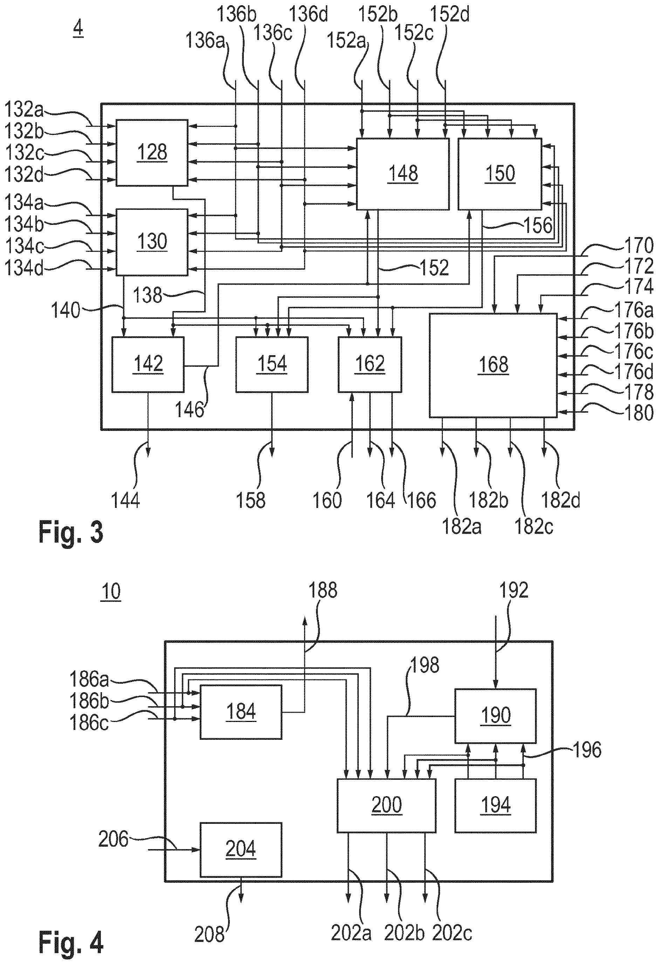

Gemäß Figur 3 ist der Verbraucherenergiekoordinator 4 für die Arbeitshydraulik beispielhaft dargestellt. Dieser wird hierbei für zwei hydraulische Kreise eingesetzt. Über den Block 128 wird der benötigte Volumenstrom des ersten hydraulischen Kreises und über den Block 130 der benötigte Volumenstrom des zweiten hydraulischen Kreises ermittelt. Als Eingangsgröße weist der Block 128 Volumenstromsollwerte 132a bis 132d des ersten hydraulischen Kreises auf. Der Block 130 weist als Eingangsgröße Volumenstromwerte 134a bis 134d des zweiten hydraulischen Kreises auf. Des Weiteren wird beiden Blöcken 128 und 130 als weitere Eingangsgröße mögliche Überlasten 136a bis 136d gemeldet. Die ermittelten Volumenstromsollwerte der Blöcke 128 und 130 werden dann über eine Verbindung 138 beziehungsweise 140 an einen Block 142 gemeldet, der als Verbindung der Hydraulikkreise dient und als Ausgang eine Ansteuerung 144 der Verbindung vorsieht. Als weitere Ausgangsgröße des Blocks 142 ist eine Pumpensynchronisierung (Druck) vorgesehen, die über die Verbindung 146 den Blöcken 148 und 150 gemeldet wird. In dem Block 148 wird dann ein benötigter Druck einer ersten Hydropumpe und in dem Block 150 ein benötigter Druck einer zweiten ermittelt. Als weitere Eingangsgröße für die Blöcke 148 und 150 sind die Überlasten 136a bis 136d vorgesehen und Druckistwerte 152a bis 152d. Der in dem Block 148 ermittelte Druck wird über eine Verbindung 152 dem Block 154 und der in dem Block 150 ermittelte Druck über eine Verbindung 156 ebenfalls dem Block 154 übermittelt. Der Block 154 der als weitere Eingangsgrößen die Volumenstromsollwerte der Hydraulikkreise über die Verbindung 138 und 140 erhält, ermittelt einen Sollleistungsbedarf der Hydropumpen. Hieraus ergibt sich eine benötigte Antriebsleistung beziehungsweise ein benötigtes Drehmoment beziehungsweise eine benötigte Drehzahl für die Hydropumpen (abgebbare Pumpenleistung), die über den Ausgang 158 dem Gesamtenergiekoordinator 2 zugeführt wird. Von diesem erhält der Verbraucherenergiekoordinator 4 über den Eingang 160 die für die Hydropumpen zur Verfügung stehende Antriebsleistung beziehungsweise Drehmoment beziehungsweise Drehzahl, die dem Block 162 des Verbraucherenergiekoordinators 4 zugeführt wird. Dieser sieht die Leistungsbegrenzung der Hydropumpen vor und weist eingangsseitig über die Verbindung 152 und 156 den benötigten Pumpendruck auf. Ausgangsseitig des Blocks 162 sind maximale Leistungen 164, 166 für die Hydropumpen vorgesehen. Eine Verteilung des verfügbaren Volumenstroms auf die Verbraucher ist über den Block 168 des Verbraucherenergiekoordinators 4 vorgesehen, wobei sicherheitsrelevante Verbraucher, wie beispielsweise die Lenkung oder die Anhängerbremse, berücksichtigt werden. Als Eingangsgröße für den Block 168 sind Volumenstromistwerte 170, 172 der Hydropumpen vorgesehen. Eine weitere Eingangsgröße ist ein Parameter eines Betriebsmodus 174. Außerdem werden dem Block 168 Volumenstromsollwerte 176a zugeführt. Außerdem sind als Eingangsgröße eine Betriebsmodusvorgabe 178 und Übergangsrandbedingungen 180 vorgesehen. Als Ausgangsgröße hat der Block 168 maximale Volumenströme 182a bis 182d für die Verbraucher.

Der Verbraucherenergiekoordinator 10 für das Niedervolt-Bordnetz gemäß Figur 4 sieht in einem Block 184 eine Ermittlung eines Verbraucherbedarfs vor. Als Eingangsgrößen für den Block 184 sind Leistungen 186a bis 186c vorgesehen. Ein Ausgang des Blocks 184 sieht einen Leistungsbedarf 188 vor, bei dem es sich um einen 12-Volt-Leistungswunsch handelt. Dieser wird an den Gesamtenergiekoordinator 2 übermittelt. Ein Block 190 des Verbraucherenergiekoordinators 10 dient zur Ermittlung der verteilbaren Leistung. Als Eingangsgröße dient hierbei eine Leistung 192 (verfügbare Niedervolt-Verbraucherleistung). Des Weiteren wird dem Block 190 von einem Block 194 eine Reserve für Sicherheitsfunktionen über Verbindung 196 übermittelt. Als Ausgangsgröße hat der Block 190 die ermittelte verteilbare Leistung, die über eine Verbindung 198 einem Block 200 gemeldet wird. Dieser dient zur Leistungszuteilung an die Verbraucher und weist als weitere Eingangsgrößen die Leistung 186a bis 186c und die Reserve für Sicherheitsfunktionen über die Verbindung 196 vom Block 194 auf. Als Ausgangsgrößen des Blocks 200 sind verfügbare Leistungen 202a bis 202c für die Verbraucher vorgesehen. Ein weiterer Block 204 des Verbraucherenergiekoordinators 10 sieht eine Ansteuerung 208 für einen DC/DC-Wandler beziehungsweise Generator vor. Als Eingang für den Block 204 ist eine Sollleistung 206 für den DC/DC-Wandler beziehungsweise Generator vorgesehen, die vom Gesamtenergiekoordinator 2 übermittelt wird.

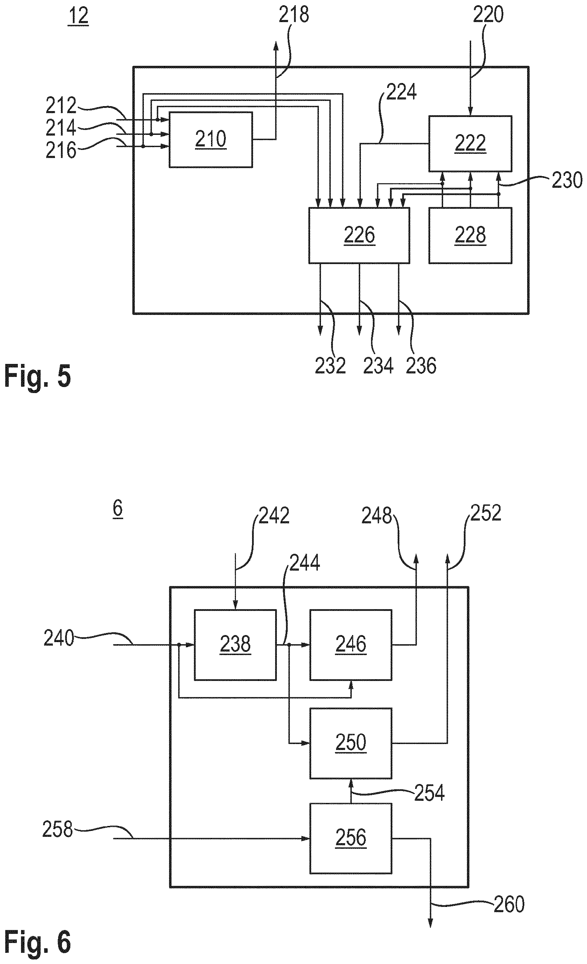

Gemäß Figur 5 ist der Verbraucherenergiekoordinator 12 für das Hochvolt-Bordnetz dargestellt. Über einen Block 210 wird hierbei ein Verbraucherbedarf ermittelt. Als Eingangsgrößen dient insbesondere eine Leistung 212 für einen elektrischen Klimakompressor und/oder eine Leistung 214 für eine elektrische Steckdose und/oder eine Leistung 216 für einen Kühlerlüfter. Von dem Block 210 wird ausgangsseitig dann ein Leistungsbedarf 218 (Leistungswunsch Hochvolt-Bordnetzverbraucher) an den Gesamtenergiekoordinator 2 übermittelt. Eine verfügbare Leistung 220 wird dann vom Gesamtenergiekoordinator 2 an einen Block 222 des Verbraucherenergiekoordinators 12 übermittelt. Hierbei handelt es sich dann um eine verfügbare Leistung 220 für die Hochvolt-Verbraucher. Mit dem Block 222 wird dann die verteilbare Leistung ermittelt, die dann über eine Verbindung 224 einen Block 226 übermittelt wird, der für die Leistungszuteilung an die Verbraucher zuständig ist. Ein Block 228 betrifft die Reserve für Sicherheitsfunktionen, die über eine Verbindung 230 dem Block 222 und dem Block 226 übermittelt wird. Als weitere Eingangsgröße für den Block 226 sind die Leistungen 212 bis 216 vorgesehen. Ausgangsseitig hat der Block 226 dann eine verfügbare Leistung 232 für den Klimakompressor und/oder eine verfügbare Leistung 234 für die Steckdose und/oder eine verfügbare Leistung 236 für den Kühlerlüfter.

Gemäß Figur 6 ist der Verbraucherenergiekoordinator 6 für die Zapfwelle dargestellt. Dieser hat einen Block 238 als Zapfwellendrehzahlregler. Dieser hat als Eingangsgröße eine Zapfwellenistdrehzahl 240. Als weitere Eingangsgröße ist eine Zapfwellensolldrehzahl 242 vorgesehen. Ausgangsseitig ist der Zapfwellendrehzahlregler über eine Verbindung 244 mit einem Block 246 verbunden, der für den Leistungsbedarf der Zapfwelle zuständig ist. Dieser übermittelt einen Leistungsbedarf 248 der Zapfwelle an den Gesamtenergiekoordinator 2. Über einen Block 250 wird ein Kurbelwellensolldrehmoment ermittelt. Der Block 250 ist dabei über die Verbindung 244 ebenfalls mit dem Block 238 verbunden und weist ausgangsseitig ein Zapfwellensolldrehmoment 252 (bezogen auf die Kurbelwelle) für den Gesamtenergiekoordinator 2 auf. Als weitere Eingangsgröße für den Block 250 ist eine Ist-Übersetzung beziehungsweise ein Wirkungsgrad vorgesehen, der über eine Verbindung 254 von einem Block 256 auf den Block 250 übertragen wird. Bei dem Block 256 handelt es sich um die Steuerung einer Übersetzung. Diese erhält über einen Eingang 258 eine Vorgabe eines Übersetzungsverhältnisses von dem Gesamtenergiekoordinator 2. Ein Ausgang des Blocks 256 sieht ein Ansteuersignal 260 für die Übersetzung vor.

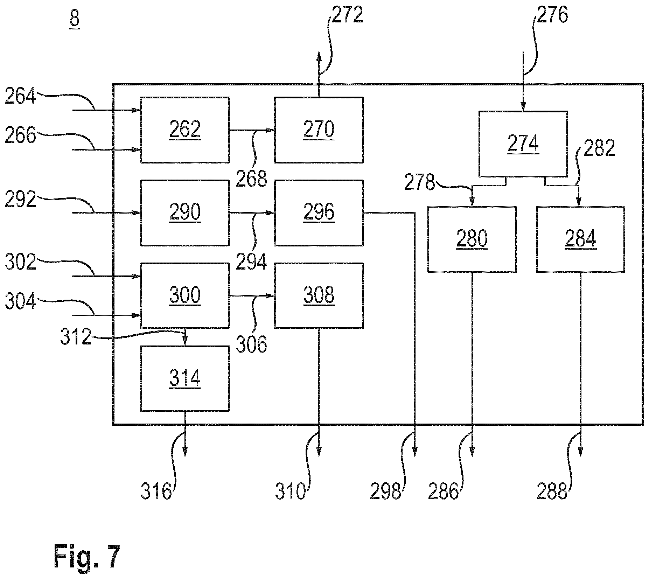

Der Verbraucherenergiekoordinator 8 für den Triebstrang ist in Figur 7 dargestellt. Dieser hat einen Block 262 für einen Tempomaten, der als Eingangsgröße eine Sollgeschwindigkeit 264 und eine Istgeschwindigkeit 266 aufweist. Über eine Verbindung 268 ist er mit einem Block 270 verbunden. Dieser ermittelt einen Leistungsbedarf beziehungsweise einen Drehmomentbedarf (Wunschleistung/Wunschmoment). Der Leistungsbedarf 272 beziehungsweise Drehmomentbedarf wird dann dem Gesamtenergiekoordinator 2 übermittelt. Ein Block 274 dient zur Einstellung einer Übersetzung. Dieser weist als Eingangsgröße eine Übersetzungsvorgabe 276 auf. Ausgangsseitig ist der Block 274 über eine Verbindung 278 mit einem Block 280 und eine Verbindung 282 mit einem Block 284 verbunden. Der Block 280 stellt die Steuerung für einen Hydrostaten dar und der Block 284 die Steuerung eines Schaltgetriebes beziehungsweise von Kupplungen. Als Ausgang des Blocks 280 sind Ansteuersignale 286 für eine Pumpe beziehungsweise einen Motor vorgesehen. Als Ausgang des Blocks 284 sind Ansteuersignale 288 für die Kupplungen beziehungsweise Gangstufen vorgesehen.

Ein weiterer Block 290 des Verbraucherenergiekoordinators 8 sieht eine Ansteuerung eines Hydraulik-Hybridmotors vor. Als Eingang ist hierbei eine Solldrehmomentvorgabe 292 für den Hydraulik-Hybridmotor vorgesehen. Ausgangsseitig ist der Block 290 über eine Verbindung 294 mit einem Block 296 verbunden, der zur Ventilregelung dient. Der Block 296 sieht ausgangsseitig Ansteuersignale 298 für den Motor vor.

Ein Block 300 dient zur Koordination hinsichtlich eines Allrads beziehungsweise einer Traktion. Als Eingang für den Block 300 sind eine Lastverteilung 302 auf einer Achse und/oder eine Lastverteilung 304 auf einer Seite vorgesehen. Der Block 300 ist über eine Verbindung 306 mit einem Block 308 verbunden, der zur Steuerung von Sperren beziehungsweise Kupplungen dient. Der Block 308 sieht ausgangsseitig Ansteuersignale 310 für Sperren beziehungsweise Kupplungen vor. Der Block 300 ist des Weiteren über eine Verbindung 312 mit einem Block 314 verbunden, der zur Steuerung zusätzlicher Hydromotoren dient. Der Block 314 sieht ausgangsseitig Ansteuersignale 316 für die Hydromotoren vor.

Die Steuerungsstruktur gemäß den Figuren 1 bis 7 hat den Vorteil, dass ein Maschinenintegrator einfach Software-Module inklusive des Energiemanagements zukaufen oder von verschiedenen Abteilungen inhouse erstellen lassen kann. Hierbei sind die einheitlichen Schnittstellen hilfreich. Die verschiedenen Verbraucherenergiekoordinatoren sind domänenspezifisch bis auf den Gesamtenergiekoordinator. Falls also eine Domäne nicht verbaut ist, so kann dieser Verbraucherenergiekoordinator einfach weggelassen werden. Für die Erstellung eines Verbraucherenergiekoordinators ist nur domänenspezifisches Fachwissen nötig. Es können einheitliche, domänenspezifische physikalische Größen in jeder Domäne verwendet werden. Es ist einfach eine Trennung von funktionaler Steuerung und dem Energiemanagement ermöglicht. Das ohne diese Steuerungsstruktur kaum zu überblickende Energiemanagement einer zukünftigen Arbeitsmaschine mit den verschiedensten Arbeitsmodusen kann in sinnvolle verständliche Blöcke mit logischen Schnittstellen geteilt werden.

Offenbart ist eine Steuerungsstruktur für eine mobile Arbeitsmaschine. Diese hat Verbraucherenergiekoordinatoren, denen jeweils mindestens eine Steuerung für zumindest einen Verbraucher zugeordnet ist. Von einem jeweiligen Verbraucherkoordinator wird anhand von Sollwerten der ihm zugeordneten Steuerung oder Steuerungen ein Leistungsbedarf für den oder die von der Steuerung gesteuerten Verbraucher ermittelt. Über einen Gesamtenergiekoordinator wird dann aus den von den Verbraucherenergiekoordinatoren ermittelten Leistungsbedarfe ein Gesamtleistungsbedarf ermittelt. Der Gesamtenergiekoordinator teilt dann die zur Verfügung stehende Leistung auf die Verbraucherenergiekoordinatoren auf, die diese wiederum auf die Steuerungen beziehungsweise Verbraucher aufteilen.

### Bezugszeichenliste

- 1: Steuerungsstruktur
- 2: Gesamtenergiekoordinator
- 4: Verbraucherenergiekoordinator
- 6: Verbraucherenergiekoordinator
- 8: Verbraucherenergiekoordinator
- 10: Verbraucherenergiekoordinator
- 12: Verbraucherenergiekoordinator
- 14: Steuerung
- 16: Sollwert
- 18: Ansteuerung
- 20: Schnittstelle
- 22: Schnittstelle
- 24: Steuerung
- 26: Schnittstelle
- 28: Schnittstelle
- 30: Steuerung
- 32: Schnittstelle
- 34: Schnittstelle
- 36: Steuerung
- 38: Schnittstelle
- 40: Schnittstelle
- 42: Steuerung
- 44: Schnittstelle
- 46: Schnittstelle
- 48: Schnittstelle
- 50: Steuerung
- 52: Schnittstelle
- 54: Steuerung
- 56: Block
- 58a bis 58f: Leistungsbedarf
- 60: Geschwindigkeitsistwert
- 62: Drehzahl
- 64: Verbindung
- 66: Block
- 68: reservierte Leistung
- 70: Block
- 72: Verbindung
- 74: Block
- 76: Leistungsgrenze
- 78: Leistungsgrenze
- 80: Drehmoment
- 82: Verbindung
- 84: Verbindung
- 86: Verbindung
- 88: Verbindung
- 90: Block
- 92: Block
- 94: Block
- 96: Ladezustand
- 98: Ladezustand
- 100: Ladezustand
- 102: Fahrmodusvorgabe
- 104: Solldrehzahl
- 106: Solldrehmoment
- 108: Solldrehmoment
- 110: Sollübersetzung
- 112: Sollübersetzung
- 114: Sollleistung
- 116: Block
- 118: Verbindung
- 120: Leistung
- 122: Leistung
- 124: Leistung
- 126: Leistung
- 128: Block
- 130: Block
- 132a bis 132d: Volumenstromsollwert
- 134a bis 134d: Volumenstromsollwert
- 136a bis 136d: Überlast
- 138: Verbindung
- 140: Verbindung
- 142: Block
- 144: Ansteuerung
- 146: Verbindung
- 148: Block
- 150: Block
- 152: Verbindung
- 154: Block
- 156: Verbindung
- 158: Ausgang
- 160: Eingang
- 162: Block
- 164: Leistung
- 166: Leistung
- 168: Block
- 170: Volumenstromistwert
- 172: Volumenstromistwert
- 174: Parameter
- 176a bis 176d: Volumenstromsollwerte
- 178: Betriebsmodusvorgabe
- 180: Übergangsbedingungen
- 182a: bis 182d Volumenstrom
- 184: Block
- 186a bis 186c: Leistung
- 188: Leistungsbedarf
- 190: Block
- 192: Leistung
- 194: Block
- 196: Verbindung
- 198: Verbindung
- 200: Block
- 202a bis 202c: Leistung
- 204: Block
- 206: Sollleistung
- 208: Ausgang
- 210: Block
- 212: Leistung
- 214: Leistung
- 216: Leistung
- 218: Leistungsbedarf
- 220: Leistung
- 222: Block
- 224: Verbindung
- 226: Block
- 228: Block
- 230: Verbindung
- 232: Leistung
- 234: Leistung
- 236: Leistung
- 238: Block
- 240: Zapfwellenistdrehzahl
- 242: Zapfwellensolldrehzahl
- 244: Verbindung
- 246: Block
- 248: Leistungsbedarf
- 250: Block
- 252: Zapfwellensolldrehmoment
- 254: Verbindung
- 258: Eingang
- 260: Ansteuersignal
- 262: Block
- 264: Sollgeschwindigkeit
- 266: Istgeschwindigkeit
- 268: Verbindung
- 270: Block
- 272: Leistungsbedarf
- 274: Block
- 276: Übersetzungsvorgabe
- 278: Verbindung
- 280: Block
- 282: Verbindung
- 284: Block
- 286: Ansteuersignal
- 288: Ansteuersignal
- 290: Block
- 292: Solldrehmomentvorgabe
- 294: Verbindung
- 296: Block
- 298: Ansteuersignale
- 300: Block
- 302: Lastverteilung
- 304: Lastverteilung
- 306: Verbindung
- 308: Block
- 310: Ansteuersignale
- 312: Verbindung
- 314: Block
- 316: Ansteuersignale

## Patentansprüche

1. Verfahren für eine Steuerungsstruktur für eine mobile Arbeitsmaschine, wobei die Steuerungsstruktur Verbraucherenergiekoordinatoren (4 bis 12) aufweist, denen jeweils über eine Schnittstelle (20, 26, 32, 38, 44, 48, 52) mindestens eine Steuerung für zumindest einen Verbraucher zugeordnet ist, wobei von einem jeweiligen Verbraucherenergiekoordinator (4 bis 12) anhand von Sollwerten der ihm zugeordneten Steuerung ein Leistungsbedarf für den oder die von der Steuerung gesteuerten Verbraucher ermittelt wird, wobei von einem Gesamtenergiekoordinator (2) der Steuerungsstruktur aus den von den Verbraucherenergiekoordinatoren (4 bis 12) ermittelten Leistungsbedarfen ein Gesamtleistungsbedarf ermittelt wird, und wobei von dem Gesamtenergiekoordinator (2) aus zu einem jeweiligen Verbraucherenergiekoordinator (4 bis 12) eine für diesen zur Verfügung stehende Leistung übermittelt wird, **dadurch gekennzeichnet, dass** die jeweilige Steuerung und der jeweilige Verbraucher von den jeweiligen Verbraucherenergiekoordinatoren (4 bis 12) gesondert sind, wobei die Verbraucherenergiekoordinatoren (4 bis 12) an die Ihnen zugeordnete Steuerung anpassbar sind.

2. Verfahren nach Patentanspruch 1, wobei ein Verbraucherenergiekoordinator (4) für eine Arbeitshydraulik vorgesehen ist, wobei dieser den Leistungsbedarf anhand eines Bedarfs eines Drucks und/oder eines Volumenstroms der Arbeitshydraulik ermittelt.

3. Verfahren nach Patentanspruch 2, wobei der Leistungsbedarf der Arbeitshydraulik von dem Verbraucherenergiekoordinator (4) als Drehmoment und/oder als Drehzahl zumindest einer Hydraulikpumpe an den Gesamtenergiekoordinator (2) übermittelt wird.

4. Verfahren nach einem der Patentansprüche 1 bis 3, wobei ein Verbraucherenergiekoordinator (6 bis 12) für eine Zapfwelle und/oder für ein Hochvolt-Bordnetz und/oder für ein Niedervolt-Bordnetz und/oder für einen Triebstrang vorgesehen

5. Verfahren nach einem der vorhergehenden Patentansprüche, wobei zumindest ein Verbrennungsmotor und /oder Elektromotor für die Verbraucher in Abhängigkeit von dem Gesamtleistungsbedarf gesteuert wird.

6. Verfahren nach einem der vorhergehenden Patentansprüche, wobei, falls der Gesamtleistungsbedarf kleiner als die zur Verfügung stehende Gesamtleistung ist, die Energiequelle oder die Energiequellen hinsichtlich ihres verbrauchsoptimalen Betriebspunktes gesteuert werden.

7. Verfahren nach einem der Patentansprüche 5 oder 6, wobei von dem Gesamtenergiekoordinator (2) eine verbrauchsoptimale Drehzahl und/oder andere wählbare Parameter eines Verbrennungsmotors und/oder eines Elektromotors ermittelt wird.

8. Verfahren nach einem der vorhergehenden Patentansprüche, wobei ein jeweiliger Verbraucherenergiekoordinator (4 bis 12) die ihm zur Verfügung stehende Leistung derart verteilt, dass die ihm zugeordneten Verbraucher in ihrem optimalen Betriebspunkt eingesetzt sind.

9. Verfahren nach einem der vorhergehenden Patentansprüche, wobei, falls der Gesamtleistungsbedarf größer als die zur Verfügung stehende Gesamtleistung ist, der Gesamtenergiekoordinator (2) die für die Verbraucherenergiekoordinatoren (4 bis 12) zur Verfügung stehende Leistung priorisiert.

10. Verfahren nach Patentanspruch 7, wobei die Priorisierung derart erfolgt, dass die Verbraucherenergiekoordinatoren (4 bis 12) für sicherheitsrelevante Verbraucher ausreichend Leistung erhalten.

11. Verfahren nach einem der vorhergehenden Patentansprüche, wobei ein jeweiliger Verbraucherenergiekoordinator (4 bis 12) die ihm zur Verfügung stehende Leistung für die ihm zugeordneten Verbraucher priorisiert.

12. Verfahren nach einem der vorhergehenden Patentansprüche, wobei ein jeweiliger Verbraucherenergiekoordinator (4 bis 12) mit dem Gesamtenergiekoordinator (2) über eine einheitliche Schnittstelle verbunden ist.

13. Verfahren nach einem der vorhergehenden Patentansprüche, wobei der Gesamtenergiekoordinator (2) eine verfügbare Gesamtleistung ermittelt.

14. Steuerungsstruktur, über die ein Verfahren gemäß einem der vorhergehenden Patentansprüche ausführbar ist, für eine mobile Arbeitsmaschine, mit Verbraucherenergiekoordinatoren (4 bis 12), denen jeweils über eine Schnittstelle (20, 26, 32, 38, 44, 48, 52) mindestens eine Steuerung für zumindest einen Verbraucher zugeordnet ist, wobei von einem jeweiligen Verbraucherenergiekoordinator (4 bis 12) anhand von Sollwerten der ihm zugeordneten Steuerung ein Leistungsbedarf für den oder die von der Steuerung gesteuerten Verbraucher ermittelbar ist, wobei von einem Gesamtenergiekoordinator (2) der Steuerungsstruktur aus den von den Verbraucherenergiekoordinatoren (4 bis 12) ermittelten Leistungsbedarfen ein Gesamtleistungsbedarf ermittelbar ist, und wobei von dem Gesamtenergiekoordinator (2) aus zu einem jeweiligen Verbraucherenergiekoordinator (4 bis 12) eine für diesen zur Verfügung stehende Leistung übermittelbar ist, **dadurch gekennzeichnet, dass** die jeweilige Steuerung und der jeweilige Verbraucher von den jeweiligen Verbraucherenergiekoordinatoren (4 bis 12) gesondert sind, wobei die Verbraucherenergiekoordinatoren (4 bis 12) an die Ihnen zugeordnete Steuerung anpassbar sind.

15. Mobile Arbeitsmaschine mit einer Steuerungsstruktur gemäß Patentanspruch 14, aufweisend:
- Einen Verbrennungsmotor, dessen Leistung von dem Gesamtenergiekoordinator (2) bestimmbar ist,
- eine vom Verbrennungsmotor angetriebene Hydraulikpumpe der Arbeitshydraulik,
- einen Fahrantrieb,
- ein elektrisches Bordnetz,
- einen vom Verbrennungsmotor angetriebenen Generator zum Laden eines Energiespeichers und zur Einspeisung von Energie in das elektrische Bordnetz und
- einen von der Hydraulikpumpe antreibbaren hydraulischen Aktuator.

## Claims

1. Method for a control structure for a mobile working machine, the control structure having load energy coordinators (4 to 12), to each of which at least one controller for at least one load is assigned via an interface (20, 26, 32, 38, 44, 48, 52), a power demand for the load or loads controlled by the controller being determined by a respective load energy coordinator (4 to 12) by using set points of the controller assigned to the latter, a total power demand being determined by a total energy coordinator (2) of the control structure from the power demands determined by the load energy coordinators (4 to 12), and a power available to a respective load energy coordinator (4 to 12) being transmitted to the latter from the total energy coordinator (2), **characterized in that** the respective controller and the respective load are separated from the respective load energy coordinators (4 to 12), wherein the load energy coordinators (4 to 12) can be matched to the controller assigned to them.

2. Method according to Patent Claim 1, wherein a load energy coordinator (4) for working hydraulics is provided, wherein the load energy coordinator determines the power demand by using a demand for a pressure and/or a volume flow of the working hydraulics.

3. Method according to Patent Claim 2, wherein the power demand of the working hydraulics is transmitted by the load energy coordinator (4) to the total energy coordinator (2) as a torque and/or as a rotational speed of at least one hydraulic pump.

4. Method according to one of Patent Claims 1 to 3, wherein a load energy coordinator (6 to 12) is provided for a power take-off shaft and/or for a high-voltage wiring system and/or for a low-voltage wiring system and/or for a drive train.

5. Method according to one of the preceding patent claims, wherein at least one internal combustion engine and/or electric motor for the loads is controlled on the basis of the total power demand.

6. Method according to one of the preceding patent claims, wherein, if the total power demand is less than the total power that is available, the load-optimized operating point of the energy source or the energy sources is controlled.

7. Method according to either of Patent Claims 5 and 6, wherein a load-optimized rotational speed and/or other selectable parameters of an internal combustion engine and/or an electric motor is/are determined by the total energy coordinator (2).

8. Method according to one of the preceding patent claims, wherein a respective load energy coordinator (4 to 12) distributes the power available to it in such a way that the load assigned to it is used at the optimal operating point of the latter.

9. Method according to one of the preceding patent claims, wherein, if the total power demand is greater than the total power that is available, the total energy coordinator (2) prioritizes the power that is available to the load energy coordinators (4 to 12).

10. Method according to Patent Claim 7, wherein the prioritization is carried out in such a way that the load energy coordinators (4 to 12) obtain sufficient power for safety-relevant loads.

11. Method according to one of the preceding patent claims, wherein a respective load energy coordinator (4 to 12) prioritizes the power that is available to it for the loads assigned to it.

12. Method according to one of the preceding patent claims, wherein a respective load energy coordinator (4 to 12) is connected to the total energy coordinator (2) via a standard interface.

13. Method according to one of the preceding patent claims, wherein the total energy coordinator (2) determines an available total power.

14. Control structure, via which a method according to one of the preceding patent claims can be carried out, for a mobile working machine, having load energy coordinators (4 to 12), to each of which at least one controller for at least one load is assigned via an interface (20, 26, 32, 38, 44, 48, 52), a power demand for the load or loads controlled by the controller being determinable by a respective load energy coordinator (4 to 12) by using set points of the controller assigned to the latter, a total power demand being determinable by a total energy coordinator (2) of the control structure from the power demands determined by the load energy coordinators (4 to 12), and a power available to a respective load energy coordinator (4 to 12) being transmittable to the latter from the total energy coordinator (2), **characterized in that** the respective controller and the respective load are separated from the respective load energy coordinators (4 to 12), wherein the load energy coordinators (4 to 12) can be matched to the controller assigned to them.

15. Mobile working machine with a control structure according to Patent Claim 14, having:
- an internal combustion engine, the power from which can be determined by the total energy coordinator (2),
- a hydraulic pump of the working hydraulics that is driven by the internal combustion engine,
- a traction drive,
- an electric wiring system,
- a generator that is driven by the internal combustion engine to charge an energy store and to feed energy into the electric wiring system, and
- a hydraulic actuator that can be driven by the hydraulic pump.

## Revendications

1. Procédé pour structure de commande d'un engin mobile, la structure de commande présentant des dispositifs (4 à 12) de coordination de l'énergie des consommateurs à chacun desquels au moins une commande d'au moins un consommateur est associée par l'intermédiaire d'une interface (20, 26, 32, 38, 44, 48, 52),
les besoins en puissance du ou des consommateurs commandés par la commande étant déterminés par chaque dispositif (4 à 12) de coordination de l'énergie des consommateurs à l'aide de valeurs de consigne de la commande qui leur est associée,
un dispositif (2) de coordination de l'énergie globale de la structure de commande déterminant un besoin global de puissance à partir des besoins en puissance déterminés par les dispositifs (4 à 12) de coordination de l'énergie des consommateurs,
la puissance disponible pour les dispositifs (4 à 12) de coordination de l'énergie des consommateurs étant transmise par le dispositif (2) de coordination de l'énergie globale à chacun de ces derniers, **caractérisé en ce que**
chaque commande et le consommateur associé sont distincts de chacun des dispositifs (4 à 12) de coordination de l'énergie des consommateurs, les dispositifs (4 à 12) de coordination de l'énergie des consommateurs pouvant être adaptés à la commande qui leur est associée.

2. Procédé selon la revendication 1, dans lequel un dispositif (4) de coordination d'énergie de consommateurs est prévu pour une hydraulique de travail, ce dispositif déterminant les besoins en puissance à l'aide d'un besoin en pression et/ou en débit volumique de l'hydraulique de travail.

3. Procédé selon la revendication 2, dans lequel les besoins en puissance de l'hydraulique de travail sont transmis au dispositif (2) de coordination de l'énergie globale par le dispositif (4) de coordination de l'énergie des consommateurs en tant que couple de rotation et/ou vitesse de rotation d'au moins une pompe hydraulique.

4. Procédé selon l'une des revendications 1 à 3, dans lequel un dispositif (6 à 12) de coordination d'énergie des consommateurs est prévu pour un arbre à tourillon et/ou un réseau de bord à haute tension et/ou un réseau de bord à basse tension et/ou un train d'entraînement.

5. Procédé selon l'une des revendications précédentes, dans lequel au moins un moteur à combustion interne et/ou un moteur électrique prévu pour les consommateurs sont commandés en fonction du besoin global en puissance.

6. Procédé selon l'une des revendications précédentes, dans lequel au cas où le besoin global en puissance est inférieur à la puissance totale disponible, la source d'énergie ou les sources d'énergie sont commandées de telle sorte qu'elles prennent leur point de fonctionnement à consommation optimale.

7. Procédé selon l'une des revendications 5 ou 6, dans lequel une vitesse de rotation et/ou d'autres paramètres aptes à être sélectionnés d'un moteur à combustion interne et/ou d'un moteur électrique sont déterminés par le dispositif (2) de coordination d'énergie globale.

8. Procédé selon l'une des revendications précédentes, dans lequel un dispositif (4 à 12) de coordination d'énergie de consommateurs répartit la puissance qui lui est fournie de telle sorte que les consommateurs qui lui sont associés soient utilisés en leur point de fonctionnement optimum.

9. Procédé selon l'une des revendications précédentes, dans lequel au cas où le besoin global en puissance est supérieur à la puissance globale disponible, le dispositif (2) de coordination de l'énergie globale détermine les priorités de la puissance disponible pour les dispositifs (4 à 12) de coordination d'énergie des consommateurs.

10. Procédé selon la revendication 7, dans lequel la détermination des priorités s'effectue de telle sorte que les dispositifs (4 à 12) de coordination de l'énergie des consommateurs reçoivent suffisamment de puissance pour les consommateurs intervenant dans la sécurité.

11. Procédé selon l'une des revendications précédentes, dans lequel un dispositif (4 à 12) de coordination de l'énergie des consommateurs détermine la priorité de la puissance qui lui est délivrée pour chacun des consommateurs qui lui sont associés.

12. Procédé selon l'une des revendications précédentes, dans lequel un dispositif (4 à 12) de coordination de l'énergie des consommateurs est relié au dispositif (2) de coordination de l'énergie globale par l'intermédiaire d'une interface commune.

13. Procédé selon l'une des revendications précédentes, dans lequel le dispositif (2) de coordination de l'énergie globale détermine une puissance globale disponible.

14. Structure de commande pour un engin mobile, par laquelle un procédé selon l'une des revendications précédentes peut être exécuté, présentant des dispositifs (4 à 12) de coordination de l'énergie des consommateurs à chacun desquels au moins une commande d'au moins un consommateur est associée par l'intermédiaire d'une interface (20, 26, 32, 38, 44, 48, 52),
les besoins en puissance du ou des consommateurs commandés par la commande pouvant être déterminés par chaque dispositif (4 à 12) de coordination de l'énergie des consommateurs à l'aide de valeurs de consigne de la commande qui leur est associée,
un dispositif (2) de coordination de l'énergie globale de la structure de commande pouvant déterminer un besoin global en puissance à partir des besoins en puissance déterminés par les dispositifs (4 à 12) de coordination de l'énergie des consommateurs,
la puissance disponible pour les dispositifs (4 à 12) de coordination de l'énergie des consommateurs pouvant être transmise par le dispositif (2) de coordination de l'énergie globale à chacun de ces derniers,
**caractérisé en ce que**
chaque commande et le consommateur associé sont distincts de chacun des dispositifs (4 à 12) de coordination de l'énergie des consommateurs, les dispositifs (4 à 12) de coordination de l'énergie des consommateurs pouvant être adaptés à la commande qui leur est associée.

15. Engin mobile doté d'une structure de commande selon la revendication 14 et présentant :
un moteur à combustion interne dont la puissance peut être déterminée par le dispositif (2) de coordination de l'énergie globale,
une pompe hydraulique, entraînée par le moteur à combustion interne, de l'hydraulique de travail,
un entraînement de roulage,
un réseau électrique de bord,
une génératrice entraînée par le moteur à combustion interne, qui charge un accumulateur d'énergie et qui injecte de l'énergie dans le réseau électrique de bord et
un actionneur hydraulique qui peut être entraîné par la pompe hydraulique.
